(19) Europäisches Patentamt
European Patent Office
Office européen des brevets

(11) EP 0 854 888 B1

(12) **EUROPÄISCHE PATENTSCHRIFT**

(45) Veröffentlichungstag und Bekanntmachung des Hinweises auf die Patenterteilung:
**26.07.2000 Patentblatt 2000/30**

(21) Anmeldenummer: **96934597.4**

(22) Anmeldetag: **09.10.1996**

(51) Int Cl.[7]: **C08G 18/67**

(86) Internationale Anmeldenummer:
**PCT/EP96/04383**

(87) Internationale Veröffentlichungsnummer:
**WO 97/13798 (17.04.1997 Gazette 1997/17)**

(54) **ELASTOMERE FASERN, POLYURETHAN-ELASTOMERE, VERFAHREN ZU DEREN HERSTELLUNG UND IHRE VERWENDUNG**

ELASTOMERIC FIBERS, POLYURETHANE ELASTOMERS, METHOD OF PRODUCING THEM AND THEIR USE

FIBRES ELASTOMERES, ELASTOMERES DE POLYURETHANE, PROCEDE DE PRODUCTION ET UTILISATION

(84) Benannte Vertragsstaaten:
**DE FR GB IE IT NL**

(30) Priorität: **09.10.1995 DE 19537608**

(43) Veröffentlichungstag der Anmeldung:
**29.07.1998 Patentblatt 1998/31**

(73) Patentinhaber: **Rhodia**
**92408 Courbevoie Cedex (FR)**

(72) Erfinder:
- **OPPERMANN, Wilhelm**
  **D-71083 Herrenberg (DE)**
- **HERMANUTZ, Frank**
  **D-71229 Leonberg (DE)**
- **HIRT, Peter**
  **D-73614 Schorndorf (DE)**
- **SCHWEIZER, Michael**
  **D-71691 Freiberg (DE)**
- **OESS, Oliver**
  **D-70499 Stuttgart (DE)**

(74) Vertreter:
**Hagemann, Heinrich, Dr.rer.nat., Dipl.-Chem. et al**
**Patentanwälte**
**Hagemann, Braun & Held,**
**Postfach 86 03 29**
**81630 München (DE)**

(56) Entgegenhaltungen:
**EP-A- 0 040 151** **DE-B- 1 051 491**

- **DATABASE WPI Week 7108 Derwent Publications Ltd., London, GB; AN 14902S XP002022774 "COPOLYMER POLYESTER POLYURETHANE PREPARATION" & JP,A,46 007 115 (TEIJIN) , 1971**
- **DATABASE WPI Week 8824 Derwent Publications Ltd., London, GB; AN 165844 XP002022775 "POLYESTER TYPE URETHANE ELASTIC YARN" & JP,A,63 105 109 (TOYOBO) , 10.Mai 1988**
- **Chemiefasern/Textilindustrie, Frankfurt/Main, Juni 1996, Band 44, Nr. 6, Seiten 388-391**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft elastomere Fasern, erhältlich aus Polyurethan-Elastomer, Polyurethan-Elastomere mit bestimmten Strukturelementen, ein Verfahren zu deren Herstellung sowie deren Verwendung in Schmelzspinn- und Extrusions-verfahren zur Herstellung von Folien bzw. Fasern.

Polyurethan-Elastomere sind Blockcopolymere, die aus regelmäßig angeordneten weichen und harten Segmenten aufgebaut sind. Die weichen Segmente bestehen aus langen, ungeordneten und flexiblen Ketten, die der Faser die erforderliche gummiartige Elastizität geben. Die Eigenschaften können mit der Molmasse und Art des Weichsegmentes hinsichtlichen Dehnung und Dehnkraft variiert werden. Die harten Segmente sind für die Rückstellung der Molekülketten nach der Deformation verantwortlich. Sie bestehen aus kurzkettigen kristallinen Bereichen. Hauptaufgabe der Hartsegmente ist es, bei Einwirkung von mechanischen Kräften als Fixpunkte ein Abgleiten der Polymerketten zu verhindern. Die im Elastomer vorhandenen Rückstellkräfte bewirken nach einer Verdehnung ein Zusammenziehen auf nahezu die Ausgangslänge. Der verbleibende Längenunterschied wird Restdehnung genannt.

Die Polyurethan-Elastomeren werden im allgemeinen nach einem zweistufigen Verfahren erhalten, bei dem im ersten Reaktionsschritt höhermolekulare Diole mit Diisocyanaten zu Prepolymeren umgesetzt werden, die in einem zweiten Schritt mit sogenannten Kettenverlängerungsmitteln zu hochmolekularen Produkten reagieren. Im ersten Reaktionsschritt werden überschüssige Mengen an Diisocyanat eingesetzt, so daß das Prepolymer an beiden Enden durch eine Isocyanatgruppe terminiert ist. Bei den Kettenverlängerungsmitteln handelt es sich um bifunktionelle, niedermolekulare Verbindungen mit endständigen reaktionsfähigen Wasserstoffatomen, meist Dihydroxy- oder Diaminverbindungen. Diese reagieren mit den Prepolymeren zu den entsprechenden Carbamidsäure-Derivaten, d.h. den Polyurethan-Elastomeren bzw. Polyharnstoffurethan-Elastomeren. In den Makromolekülketten wechseln die aus den höhermolekularen Diolen gebildeten Weichsegmente mit den durch die Reaktion des Kettenverlängerers mit endständigen Isocyanatgruppen gebildeten starren Hartsegmenten ab.

Die unterschiedliche chemische Zusammensetzung von Hart- und Weichsegmenten sowie ihre unterschiedlichen Polaritäten und Molekulargewichte führen zu einer Entmischung. Wasserstoffbrückenbindungen zwischen benachbarten Ketten bewirken, daß sich die Hartsegmente parallel aneinanderlagern. Die langen beweglichen Molekülketten dazwischen bilden Verhakungen und Verschlaufungen, die bei Dehnung des weitmaschingen Netzwerkes gelöst und gestreckt werden. Die Wechselwirkungen zwischen den Hartsegmenten verhindern ein plastisches Fließen der Molekülketten im gedehnten Zustand. Das Dehnen der Makromoleküle ist mit einem Übergang in eine höhergeordnete Konformation und einer Abnahme der Entropie verbunden. Nach Entlastung erfolgt aufgrund der thermischen Bewegung der Moleküle ihre Rückkehr in den mit höherer Entropie verbundenen Zustand der Verschlaufungen. Bei starker mechanischer Beanspruchung kann jedoch eine bleibende Dehnung eintreten, indem die Polymerketten im gedehnten Zustand abgleiten.

Die Hartsegmente haben bei Polyurethan-Elastomeren sowohl eine dehnungsbegrenzende Vernetzungsfunktion als auch einen entscheidenden Einfluß auf das thermische Verhalten bzw. den Schmelzbereich. Die bei Verwendung von Diamin-Kettenverlängerern entstehenden Harnstoffgruppen sind polarer als die durch Glykolverlängerung gebildeten Urethangruppierungen. Aufgrund von stärkeren Wasserstoffbrücken resultieren bei den Polyurethan-Elastomeren sowohl größere Entmischungserscheinungen von Hart- und Weichsegmenten und somit bessere elastische Eigenschaften als auch höhere Hartsegmenterweichungspunkte.

Aus der Literatur sind verschiedene Spinnverfahren zur Herstellung von Elastomergarnen bekannt. Der überwiegende Teil der Elastomerfasern wird nach dem Trockenspinnverfahren hergestellt. Dabei wird eine hochviskose Lösung durch Mehrlochdüsen in senkrecht stehende beheizte Spinnschächte gepreßt. Gleichzeitig erfolgt die Zuführung von Heißluft, um das Lösungsmittel zu verdampfen und die Filamente zu verfestigen. Die Spinngeschwindigkeit liegt im Bereich von etwa 200 bis 600 m/min. Aufgrund der geringen Verweilzeit im Spinnschacht und zur Gewährleistung vollständiger Lösungsmittelentfernung werden die Einzeltiter auf maximal 20 dtex begrenzt. Die Herstellung des Endtiters erfolgt durch Zusammenführung entsprechender Einzelkapillaren unter Aufbringung eines Falschdralls.

Beim Naßspinnen werden die hergestellten Polymerlösungen in ein Koagulationsbad gesponnen. Anschließend werden die Garne gewaschen, miteinander verklebt und getrocknet. Die Abzugsgeschwindigkeit beträgt etwa 100 m/min.

Das Reaktivspinnverfahren vereint eine chemische Reaktion mit dem Spinnverfahren. Es wird das Prepolymer durch Mehrlochdüsen in ein Spinnbad von z.B. aliphatischen Diaminen extrudiert. Dabei erfolgt an der Oberfläche des Filaments eine sofortige Isocyanat-Amin-Reaktion zu Polyharnstoffurethanen. Die relativ feste Haut ermöglicht einen sicheren Spinnprozeß. Das Innere der Faser wird durch Behandlung mit heißem Wasser oder durch Reaktion mit Diamin-Alkohol oder -Toluol ausgehärtet. Die Spinngeschwindigkeiten liegen im Bereich des Naßspinnverfahrens.

Beim Schmelzverspinnen wird das Polymer in einem Zylinder aufgeschmolzen und die Schmelze mit Zahnradpumpen oder Extruderschnecken durch die Düsenplatte gedrückt, wobei die austretenden Fasern an der Luft erstarren. Der Vorteil dieser Technologie liegt in der lösungsmittelfreien Verspinnung zum Garn. Dieses wirtschaftlich bedeutende Verfahren wurde bislang nicht auf Polyurethan-Elastomere angewendet, die mit aminohaltigen Kettenverlängerern verlängert wurden. Diese Polymere zersetzen sich aufgrund des hohen Erweichungspunktes der Hartsegmente üblicherweise vor dem Schmelzen.

Handelsübliche schmelzgesponnene elastomere Polyurethanfasern beruhen daher auf hydroxylgruppenhaltigen Kettenverlängerern. F. Fourné (Chemiefasern/Textilind. 96 (1994), 392-398) berichtet über den japanischen Hersteller Kanebo, der Pilotanlagen betreibt, in denen die Polyurethan-Ester-Faser "Lobell" nach dem Schmelzspinnverfahren gewonnen wird. Auch die schmelzgesponnenen Polyether-Ester-Garne "Rexe" und "Spantel" der Firmen Teijin bzw. Kuraray Co. sind seit 1993 im Handel. Die mechanischen Eigenschaften dieser Fasern sind nicht zufriedenstellend, weil hier in den Hartsegmenten Urethangruppen anstelle von Harnstoffgruppen vorliegen, die, wie oben ausgeführt, aufgrund schwächerer Wasserstoffbrückenbindungen zu geringerer mechanischer Stabilität führen.

Eine Verbesserung der textilmechanischen Eigenschaften gelang durch kovalente Vernetzung der Hartsegmente (F. Hermanutz. P. Hirt, Chemiefasern Textilind. 96 (1994), 388-391). Zu diesem Zweck wurden durch Verwendung von doppelbindungshaltigen Kettenverlängerern vernetzungsfähige Zentren geschaffen. Durch Elektronen- oder UV-Bestrahlung kann nach dem Verspinnen eine nachträgliche Polymerisation ausgelöst werden. Diese Polyurethan-Elastomere unterliegen jedoch der Beschränkung, daß die diaminkettenverlängerten Polyurethan-Elastomeren nicht schmelzverspinnbar sind. Bei der Elektronen- oder UV-Bestrahlung zeigen diese bekannten Polyurethan-Elastomere außerdem starke Vergilbung.

Es war daher Aufgabe der vorliegenden Erfindung, elastomere Fasern bzw. Polyurethan-Elastomere bereitzustellen, die aufgrund geeigneter Schmelzpunkte vorteilhaft schmelzversponnen werden können und, gegebenenfalls nach geeigneter Nachbehandlung, z.B. durch Bestrahlung mit energiereicher Strahlung, zu Fasern mit verbesserten mechanischen Eigenschaften führen.

Erfindungsgemäß wird diese Aufgabe gelöst durch elastomere Fasern, dadurch erhältlich, daß man

(a) ein Polyurethan-Elastomer, enthaltend Struktureinheiten des Typs:

$$\left[\left(-NH-\overset{O}{\overset{\|}{C}}-O-R^1-O-\overset{O}{\overset{\|}{C}}-NH-R^2\right)_n-NH-\overset{O}{\overset{\|}{C}}-Y-X-Y-\overset{O}{\overset{\|}{C}}-NH-R^2-\right]_m \quad ,$$

worin bedeuten:

die Gruppierung $-O-R^1-O-$ einen Makrodiol-Rest eines Molekulargewichts von 500 bis 10000,
$R^2$ einen zweiwertigen aliphatischen, cycloaliphatischen und/oder aliphatisch-cycloaliphatischen Rest und
X einen olefinisch ungesättigten Rest, wobei die flankierenden Gruppen maximal 14 Bindungen voneinander entfernt sind,
Y NH oder O sowie
n eine ganze Zahl von 1 bis 10 und
m eine ganze Zahl von mindestens 4,

zu einer Faser schmelzverspinnt und

(b) die erhaltene Faser energiereichen Strahlen aussetzt, um das Polyurethan-Elastomer zumindest teilweise zu vernetzen.

Gegenstand der Erfindung ist auch ein Polyurethan-Elastomer, enthaltend Struktureinheiten des Typs

$$\left[\left(-NH-\overset{O}{\overset{\|}{C}}-O-R^1-O-\overset{O}{\overset{\|}{C}}-NH-R^2\right)_n-NH-\overset{O}{\overset{\|}{C}}-Y-X-Y-\overset{O}{\overset{\|}{C}}-NH-R^2-\right]_m \quad ,$$

worin bedeuten:

die Gruppierung $-O-R^1-O-$ einen Makrodiol-Rest eines Molekulargewichts von 500 bis 10000,
$R^2$ einen zweiwertigen aliphatischen, cycloaliphatischen und/oder aliphatisch-cycloaliphatischen Rest und
X einen olefinisch ungesättigten Rest, wobei die flankierenden Gruppen maximal 14 Bindungen voneinander entfernt sind,
Y NH sowie
n eine ganze Zahl von 1 bis 10 und
m eine ganze Zahl von mindestens 4.

In einem erfindungsgemäßen Polyurethan-Elastomer oder den erfindungsgemäßen elastomeren Fasern sind demzufolge die Reste $R^1$, $R^2$ und X von Bedeutung.

Der Rest $R^1$ geht auf ein Makrodiol zurück. Es werden bevorzugt im wesentlichen lineare Diole verwendet, die außer den endständigen Hydroxylgruppen keine weiteren mit Isocyanaten reagierenden Gruppen tragen. Die Makrodiole weisen ein Molekulargewicht von 500 bis 10000, vorzugsweise 700 bis 5000, insbesondere 1000 bis 3000 auf. Das Molekulargewicht versteht sich als gewichtsgemitteltes durchschnittliches Molekulargewicht. Werden die Makrodiol-Reste zu kurz, wird der Kohäsionsenergieunterschied zwischen Hart- und Weichsegmenten geringer, was eine stärkere Phasenvermischung und somit schlechtere elastische Eigenschaften zur Folge hat. Makrodiole mit einem niedrigen Glasumwandlungspunkt werden bevorzugt eingesetzt. Im allgemeinen liegen die Glasumwandlungspunkte der verwendeten Makrodiole bei etwa -35°C bis -60°C.

Es werden bevorzugt Polyester- bzw. Polyetherglykole eingesetzt. Als Polyetherglykole werden Hydroxylgruppen-terminierte Polyether bezeichnet. Vorzugsweise werden Polyalkylenglykole eingesetzt. Bevorzugte Beispiele sind Polyethylenglykol, Polypropylen-glykol und/oder Polytetramethylenglykol, wovon das letztere besonders bevorzugt ist. Polytetramethylenglykol wird auch als Polytetrahydrofuran bezeichnet und kann durch ionische Polymerisation von Tetrahydrofuran mit sauren Katalysatoren hergestellt werden. Geeignete Copolymere werden auch durch Mischpolymerisation von Tetrahydrofuran mit Propylenoxid, Ethylenoxid und Glykolen erhalten. Aus Polyetherglykolen synthetisierte Elastomere zeichnen sich durch vorteilhaftes Tieftemperaturverhalten und durch hohe Hydrolysestabilität aus.

Geeignete Polyesterglykole werden vorzugsweise durch Verestern einer aliphatischen und/oder cycloaliphatischen Dicarbonsäure mit überschüssigen Mengen eines Diols hergestellt. Als bevorzugte Dicarbonsäuren sind Succinsäure, Glutarsäure. Adipinsäure. Pimelinsäure, Azelainsäure und Sebacinsäure zu nennen. Die Dicarbonsäure wird mit einem Überschuß an Diol, vorzugsweise Ethylenglykol, Diethylenglykol, Triethylengylkol, Propylenglykol, 1,4-Butandiol, 1,5-Pentandiol und/oder 1,6-Hexandiol, verestert. Besonders bevorzugt ist ein Polyester aus Adipinsäure und Ethylenglykol. Polyestersegmente neigen bei tiefen Temperaturen zur Kristallisation, was auf Kosten der elastischen Eigenschaften geht. Eine Verminderung der Kristallisationstendenz der Polyesterketten wird vorzugsweise durch den Einbau von Methyl-Verzweigungen bewirkt. Dies kann durch teilweisen Ersatz der genannten Diole durch andere Diole. wie 1,2-Propandiol und 2,3-Butandiol, oder die Verwendung von methyl-substituierten Dicarbonsäuren geschehen. Durch Verwendung der genannten längerkettigen Glykole, wie 1,4-Butandiol, 1,5-Pentandiol und/oder 1,6-Hexandiol, werden Elastomere mit erhöhter Hydrolysebeständigkeit erhalten.

Geeignete Polyesterglykole können auch durch Umsetzen von omega-Hydroxycarbonsäuren mit geringen Mengen an Diolen bzw. durch Ringöffnungspolymerisation von Lactonen mit geringen Mengen Diol erhalten werden. Es können auch Mischungen von Polyetherglykolen und Polyesterglykolen herangezogen werden. Bezüglich geeigneter Makrodiole sei auch auf Ullmanns Encyklopädie der technischen Chemie, 3. Aufl., 1963, Verlag Urban & Scharzenberg, München Berlin, Bd. 14, S. 344f verwiesen.

Erfindungsgemäße elastomere Fasern oder ein erfindungsgemäßes Polyurethan-Elastomer umfassen daneben einen zweiwertigen aliphatischen, cycloaliphatischen und/oder aliphatisch-cycloaliphatischen Rest $R^2$. Es wurde überraschenderweise gefunden, daß der Rest $R^2$ das Schmelzverhalten und damit die Schmelzverspinnbarkeit bzw. Schmelzextrudierbarkeit des Polyurethanelastomeren wesentlich mitbestimmt. Es wurde außerdem gefunden, daß durch Auswahl geeigneter Rest $R^2$ das Vergilben bei der Bestrahlung mit energiereicher Strahlung vermindert bzw. ausgeschlossen werden kann. Wenn die Reste $R^2$ ausschließlich aus aromatischen Resten bestehen, sind die resultierenden elastomeren Fasern oder Polyurethan-Elastomere nicht mehr unzersetzt schmelzbar und damit nicht schmelzverspinnbar. Beim Vorliegen ausschließlich aromatischer Reste $R^2$ tritt bei der Nachbehandlung mit energiereicher Strahlung starkes Vergilben auf. Die erfindungsgemäßen elastomeren Fasern oder Polyurethan-Elastomere enthalten daher im wesentlichen nicht-aromatische Reste $R^2$. Es können jedoch in erfindungsgemäßen elastomeren Fasern oder Polyurethan-Elastomeren aromatische Reste $R^2$ bis zu einem Anteil vorliegen, der die gewünschten Eigenschaften der Fasern oder des Elastomers nicht beeinträchtigt. Üblicherweise liegen aromatische Reste zu weniger als 20 Mol.-%, insbesondere weniger als 10 Mol-%. bezogen auf die Gesamtmenge an Resten $R^2$, vor. Vorzugsweise ist der zweiwertige Rest $R^2$ eine Alkylengruppe mit 2 bis 14 Kohlenstoffatomen, eine Cycloalkylengruppe mit 5 bis 8 Kohlenstoffatomen und/oder eine aliphatisch-cycloaliphatische Gruppe mit 7 bis 24 Kohlenstoffatomen. Besonders bevorzugte Reste $R^2$ gehen auf ein Diisocyanat in Form von Hexamethylendiisocyanat und/oder Dicyclohexylmethan-4,4'-diisocyanat zurück.

Erfindungsgemäße elastomere Fasern oder das erfindungsgemaße Polyurethan-Elastomer umfassen ferner einen kurzkettigen, olefinisch ungesättigten Rest X. Der Begriff "kurzkettig" bedeutet, daß die den Rest X flankierenden

beiden O- bzw. NH-Gruppen bei den elastomeren Fasern un NH-Gruppen beim Polyurethan-Elastomer maximal 14, insbesondere maximal 11 Bindungen voneinander entfernt sind. Mit "olefinischer Ungesättigtheit" soll ausgesagt werden, daß der Rest eine oder mehrere zu Polymerisationsreaktionen fähige Doppel- oder Dreifachbindungen aufweist. Die Doppel- oder Dreifachbindung kann sich in der Hauptkette befinden, sie kann jedoch auch in einer lateralen Seitengruppe angeordnet sein.

Der olefinisch ungesättigte Rest geht in einer Ausführungsform auf ein Diaminoalken. Diaminoalkin und/oder Diaminocycloalken zurück. In einer anderen Ausführungsform geht der olefinische ungesättigte Rest auf ein Alkendiol, Alkindiol und/oder Cycloalkendiol zurück. Die Amino- bzw. Hydroxygruppen können sich unmittelbar an Kohlenstoffatomen befinden, von denen die Doppel- oder Dreifachbindung ausgeht. Derartige Verbindungen enthalten im allgemeinen weitere Substituenten, die die Verbindung elektronisch stabilisieren. Die Amino- oder Hydroxygruppen können auch durch eine oder mehrere Bindungen von den Kohlenstoffatomen getrennt sein, von denen die Doppel- oder Dreifachbindung ausgeht. Bevorzugte Beispiele geeigneter Diamine sind cis- oder trans-1,4-Diaminobut-2-en, cis- oder trans-4,4'-Diaminostilben, Diaminomaleinsäuredinitril, 1,4-Diaminobut-2-in und/oder 3,6-Diaminocyclohexen-(1). Bevorzugte Beispiele geeigneter Diole sind Glycerin-1-allylether, cis- oder trans-2-Buten-1,4-diol, 2-Butin-1,4-diol und 5,6-Bis-(hydroxymethyl)-bicyclo[2.2.1.]hepten-2. Es können auch Mischungen ungesättigter Diamine und/oder Diole mit anderen Aminen bzw. Diolen verwendet werden, solange die gewünschten Eigenschaften der resultierenden elastomeren Fasern oder Polyurethan-Elastomeren nicht beeinträchtigt werden.

Die Zahl n kann von 1 bis 10 reichen. Hierdurch ist die Zahl der in einem betrachteten Weichsegment vorliegenden Makrodiolreste gegeben. Die Zahl n unterliegt bei einem gegebenen Elastomer verteilungsstatistischen Schwankungen. Es wird bevorzugt, daß der Durchschnittswert von n klein ist, d.h. von 1 bis 6, insbesondere 1 bis 3, reicht.

Die Zahl der sich wiederholenden Weichsegment/Hartsegementeinheiten m einer Polyurethan-Elastomer-Kette beträgt mindestens 4, vorzugsweise mindestens 8. Kürzere Ketten können aufgrund der Klebrigkeit der erhaltenen Produkte nicht schmelzextrudiert bzw. schmelzversponnen werden. Üblicherweise liegt m im Bereich von 8 bis 75.

Erfindungsgemäße Polyurethan-Elastomere oder elastomere Fasern können Zusatzstoffe in Form von Mattierungsmitteln, Farbpigmenten, Antioxidationsmitteln, Thermostabilisatoren, Foto- bzw. UV-Stabilisatoren und/oder Hydrolysestabilisatoren enthalten.

Gegenstand der Erfindung ist auch ein Verfahren zur Herstellung der vorstehend bezeichneten Polyurethan-Elastomeren. Die einzusetzenden Polyether- oder Polyesterglykole werden vorzugsweise entweder bereits wasserfrei bezogen oder vor der Umsetzung durch beispielsweise Azeotropdestillation von anhaftenden Wassermengen befreit. Das Makrodiol und ein Diisocyanat OCN-$R^2$-NCO werden in einem Molverhältnis von 1:5 bis 1:1,1, insbesondere 1:2 bis 1:1,1, bei einer Temperatur zwischen etwa 60 und 150°C, vorzugsweise zwischen etwa 80 und 135°C. umgesetzt. Die Umsetzung kann ohne Lösungsmittel in der Schmelze oder in einem polaren Lösungsmittel, wie Dimethylformamid oder Dimethylacetamid, durchgeführt werden. Wahlweise kann ein Polyadditionskatalysator, insbesondere Dibutylzinndilaurat oder Dibutylzinndiacetat, zur Einstellung eines gewünschten Reaktionsniveaus zugegeben werden. Bei Umsetzungen in einem Lösungsmittel ist regelmäßig ein Katalysator erforderlich. Je nach gewähltem Molverhältnis werden die Makrodiole über Urethanbindungen zum Prepolymeren "vorverlängert" (NCO/OH < 2) oder nur an den Kettenenden mit den Diisocyanaten verknüpft (NCO/OH = 2). Die Umsetzung unterliegt verteilungsstatistischen Gesetzen. Vorzugsweise liegt das Molverhältnis von Makrodiol zu Diisocyanat zwischen 1:4 bis 1:1,5. Typische Molverhältnisse sind 1:4, 1:3, 1:2, 2:3 und 3:5.

Die erhaltenen Prepolymere werden anschließend in einem zweiten Reaktionsschritt mit einem olefinisch ungesättigten Diamin oder Diol als Kettenverlängerer umgesetzt. Hierzu werden die Prepolymeren geschmolzen oder in einem geeigneten Lösungsmittel, wie Dimethylformamid oder Dimethylacetamid, gelöst und mit dem flüssigen bzw. geschmolzenen oder in dem gleichen oder anderen Lösungsmittel gelösten Kettenverlängerungsmittel vereint. Die Umsetzung erfolgt vorzugsweise bei Temperaturen zwischen etwa 70 und 150°C. insbesondere bei etwa 80 bis 135°C. Vorzugsweise wird ein Polyadditionskatalysator, insbesondere Dibutylzinndilaurat oder Dibutylzinndiacetat, eingesetzt. Vorzugsweise wird das geschmolzene oder gelöste Prepolymer zu dem Diamin oder Diol gegeben, um unerwünschte Nebenreaktionen überschüssiger Isocyanatgruppen mit bereits gebildeten Harnstoff- oder Urethangruppen unter Ausbildung von Quervernetzungen zu vermeiden. Zur Erzielung einer möglichst großen Kettenlänge ist es überdies wünschenswert, daß das Prepolymer und der Kettenverlängerer in einem derartigen Mengenverhältnis umgesetzt werden, daß stöchiometrische Mengen an Isocyanatfunktionen und Amin- oder Hydroxyfunktionen miteinander reagieren. Die benötigte Menge an Kettenverlängerer kann aus dem ursprünglich eingesetzen Molverhältnis von Diisocyanat und Makrodiol berechnet werden. Hierbei bleiben die Mengen an Diisocyanat unberücksichtigt, die durch Verunreinigungen oder Feuchtigkeitsspuren verlorengehen. Es wird daher bevorzugt, den Isocyanatgruppengehalt des Prepolymeren z. B. durch Titration zu bestimmen und daraus die benötigte Menge an Kettenverlängerer zu berechnen.

Insbesondere bei Einsatz ungesättigter Diol-Kettenverlängerer ist es bevorzugt, sowohl Prepolymersynthese als auch Kettenverlängerung in Abwesenheit von Lösungsmitteln durchzuführen.

In Einzelfällen ist auch eine Umgehung der Prepolymerenstufe möglich ("one shot-process"). Hierbei reagiert das Diisocyanat gleichzeitig mit dem Makrodiol und dem Kettenverlängerer. Die Reaktion kann sowohl in der Schmelze als auch in einem geeigneten Lösungsmittel erfolgen.

Erfindungsgemäße Polyurethan-Elastomere lassen sich durch übliche Formgebungs- oder Spinnverfahren, vorzugsweise durch Schmelzverspinnen zu einer Faser bzw. durch Schmelzextrusion zu einer Folie, verarbeiten. Derart hergestellte Fasern weisen vorteilhafte elastische Eigenschaften auf, insbesondere günstige Werte der Reißkraft, der Reißdehnung, der Restdehnung und der HDT-Temperatur (Heat Distortion Temperature).

Zur weiteren Verbesserung der textilmechanischen Eigenschaften der aus den erfindungsgemäßen Polyurethan-Elastomeren geformten Folien bzw. Fäden wird die kovalente Vernetzung der in den Polymerketten eingebauten Doppel- bzw. Dreifachbindungen induziert. Hierzu werden die geformten Folien bzw. Fäden energiereichen Strahlen ausgesetzt. Vorzugsweise werden die Fasern bzw. die Folie mit Elektronenstrahlen oder UV-Strahlen behandelt. Diese Nachbehandlung führt zu einer deutlichen Verbesserung der Werte der Reißkraft, der Reißdehnung, der Restdehnung und der HDT-Temperatur der Faser. Ein qualitativer Nachweis der Vernetzung ist die weitgehende Unlöslichkeit der bestrahlten Fasern in Lösungsmitteln, wie Dimethylacetamid. Während sich unbestrahlte Fasern bereits nach kurzer Zeit in Dimethylacetamid auflösen, blieben die elektronenbestrahlten Fasern unter Erhalt ihrer elastischen Eigenschaften weitgehend unlöslich.

Die Erfindung soll nun durch Ausführungsbeispiele und die anliegenden Figuren 1 bis 6 näher erläntert werden.

Figur 1 zeigt den Verlauf der Restdehnung im ersten und fünften Belastungszyclus in Abhängigkeit von der Strahlungsdosis bei der Elektronenbestrahlung einer Butandiolkettenverlängerten Polyurethanfaser. Figur 2 zeigt den Verlauf der Reißdehnung und Reißkraft in Abhängigkeit von der Bestrahlungsdosis der gleichen Polyurethanfaser. Figur 3 zeigt den Verlauf der Restdehnung nach dem ersten, Figur 4 den Verlauf der Restdehnung nach dem fünften Dehnungszyclus in Abhängigkeit von der Strahlungsdosis bei der Elektronenbestrahlung einer Butindiol-kettenverlängerten Polyurethanfaser. Figur 5 zeigt den Verlauf der Restdehnung im ersten und fünften Belastungszyclus in Abhängigkeit von der Strahlungsdosis bei der Elektronenbestrahlung einer Butendiolkettenverlängerten Polyurethanfaser und Figur 6 den Verlauf der Reißdehnung und Reißkraft in Abhängigkeit von der Strahlungsdosis der gleichen Faser.

Beispiel 1

*A) Prepolymersynthese*

Polytetramethylenglykol (0,5 Mol) eines Molekulargewichts von 2000 wurde bei 80°C aufgeschmolzen und in einem trockenen Kolben, der mit Rührer, Rückflußkühler, Stickstoffeinlaß und Tropftrichter versehen war, vorgelegt. Unter Stickstoffstrom und Rühren wurde bei 60°C innerhalb von 20 min Hexamethylendiisocyanat (0,75 Mol) zugetropft. Das Reaktionsgemisch wurde auf 125°C erwärmt und 2 h lang bei dieser Temperatur gerührt. Nach dem Abkühlen wurde das Reaktionsgemisch mit Dimethylacetamid verdünnt.

*B) Bestimmung des NCO-Gehalts in Prepolymeren*

Zu einer genau eingewogenen Menge Prepolymerlösung wurden 10 ml Chlorbenzol sowie 2 ml einer 10 gew.-%igen Dibutylaminlösung (in Chlorbenzol) zugegeben. Das Gemisch wurde 10 min gerührt. Nach Zugabe von 30 ml Methanol und 5 Tropfen einer 0,1 gew-%igen Bromphenolblaulösung (in Methanol) wurde der verbleibende Gehalt an Dibutylaminlösung durch Titration mit 0,1 n Salzsäure ermittelt. Der Farbumschlag erfolgte in dem Zweiphasensystem von hellblau nach grün. In einem Blindversuch wurde analog obiger Vorschrift jedoch ohne Prepolymerlösung, verfahren. Der Isocyanatgehalt wurde wie folgt berechnet:

$$\text{NCO (Gew.-\%)} = \frac{(A - B) \cdot n \cdot 42{,}02 \text{ mg (NCO)} \cdot 100\%}{\text{Einwaage Prepolymer (mg)}}$$

A = Verbrauch an Salzsäure (ml) in der Blindprobe
B = Verbrauch an Salzsäure (ml) in der Prepolymerprobe
n = Normalität der Salzsäurelösung
42,02 = Gewicht der Isocyanat-Gruppe

*C) Berechnung der benötigten Menge an Kettenverlängerer*

Nach Bestimmung des Isocyanatgehaltes wurde die für die Herstellung des Elastomeren benötigte Menge an Kettenverlängerer nach folgender Formel berechnet:

$$g(KV) = \frac{MG\ (KV) \cdot Gew.\text{-}\%\ NCO \cdot Menge\ Prepolymer\ (g)}{2 \cdot MG\ (NCO) \cdot 100\%}$$

MG (KV) = Molekulargewicht de Kettenverlängers (g/Mol)
Gew.-% NCO = Isocyanatgehalt in Gewichtsprozent
MG (NCO) = Molekulargewicht der Isocyanatgruppe (g/Mol)

*D) Kettenverlängerung*

Aus dem Gehalt an Makrodiisocyanat in der Polymerlösung wurde die benötigte Menge an Diaminomaleinsäuredinitril berechnet. Die Gesamtmenge DMA wurde so gewählt, daß daraus eine 20%ige Polymerlösung resultierte. Zu einer auf 100°C erwärmten Lösung des Diaminomaleinsäuredinitrils und von 1 g Dibutylzinndilaurat in DMA wurde die Prepolymerlösung innerhalb 2 h unter Rühren zugetropft. Die Mischung wurde 2 h bei 100°C gerührt und unter Stickstoff aufbewahrt. Das hergestellte Polymer wurde in Wasser ausgefällt und 48 h gefriergetrocknet.

Beispiel 2

*Schmelzspinnen*

Zum Schmelzspinnen wurde das gefriergetrocknete Polyurethan-Elastomer in Stücke geschnitten und in den Kolben einer Kolbenspinnanlage (Maschinen und Anlagen für synthetische Fasern, Fa. Emil Blaschke & Co. GmbH, Stuttgart, Endersbach) gegeben. Das Material wurde in dem Kolben bei 160°C geschmolzen und bei 170°C durch eine Spinndüse (16 Loch, Lochdurchmesser 100 µm) versponnen. Die Austrittsgeschwindigkeit betrug 2,10 m/min. Die erhaltenen Filamente wurden mit 250 m/min auf die Spule eines Wicklers gewickelt.

Beispiel 3

*Elektronenstrahlhärtung*

Die Elektronenbestrahlung wurde mit einer Elektronenstrahl-Härtungsanlage ESH 150 der Fa. Dürr Anlagenbau GmbH durchgeführt. Die Strahlendosis betrug 100 kGy.

Beispiel 4

*Kraft-Dehnungs-Messung von Fasern*

Die Kraft-Dehnungs-Messungen wurden an einer Zugprüfmaschine Modell 1435 der Firma Zwick durchgeführt. Alle Messungen fanden im Normklima statt. Die Meßmethoden orientieren sich an DIN 53835. Für die Bestimmung der Reißkraft und der Reißdehnung wurden folgende Geräteparameter gewählt:

| | |
|---|---|
| Einspannlänge | 50 mm |
| Vorkraft | 0 N |
| Prüfgeschwindigkeit | 500 mm/min |

Die Bestimmung der Restdehnung wurde in Anlehnung an DIN 53835 Teil 2 durchgeführt. Die Fasern wurden durch fünfmalige wiederholte Be- und Entlastung zwischen konstanten Dehngrenzen beansprucht. Das Gerät zeichnete den ersten und fünften Be- und Entlastungszyklus auf. Aus dem Diagramm ergaben sich die Restdehnungen und die textilmechanische Kennzahl $b_{w,5}$. Die Restdehnung $e_{1/5Rest}$ ist das Verhältnis von Restlängenänderung $\Delta l$ im ersten bzw. fünften Dehnungspiel zu ursprünglicher Meßlänge $l_0$ der Probe. Die dimensionslose Kennzahl $b_{w.5}$ beschreibt den relativen Kraftabfall zwischen dem ersten und fünften Dehnungsspiel. Folgende Geräteparameter wurden gewählt:

| | |
|---|---|
| Einspannlänge | 100 mm |
| Dehnung | 300% |
| Vorspannkraft | 0,01 cN/tex |
| Prüfgeschwindigkeit | 500 mm/min |
| Anzahl der Dehnungszyklen | 5 |

Die Ergebnisse sind in den Tabellen 1 und 2 zusammengefaßt.

Tabelle 1

| Reißkraft und Reißdehnung der Fasern | | | |
|---|---|---|---|
| | Titer (dtex) | Reißkraft (cN/tex) | Reißdehnung (%) |
| Faser, unbestrahlt | 190 | 2,7 | 581 |
| Faser, bestrahlt mit 100 kGray | 190 | 3,5 | 686 |

Tabelle 2

| Restdehnung und Kennzahl $b_{w.5}$ der Fasern | | | |
|---|---|---|---|
| | $e_{1,Rest}$ (%) | $e_{5,Rest}$ (%) | $b_{w,5}$ |
| Faser, unbestrahlt | 13 | 21 | 0.19 |
| Faser, bestrahlt mit 100 kGray | 11 | 18 | 0,24 |
| Vergleichsfaser, unbestrahlt*) | 67 | 137 | 0,19 |
| Vergleichsfaser, bestrahlt mit 100 kGray*) | 27 | 44 | 0,21 |
| handelsübliche Faser**) | 21 | 30 | 0,32 |

*) Naßgesponnene Vergleichsfaser aus Diphenylmethan-4,4'-diisocyanat und Polytetramethylenglykol (Molekulargewicht 2000) sowie Diaminomaleinsäuredinitril als Kettenverlängerer, hergestellt nach F. Hermanutz, P. Hirt, Chemiefasern/Textilind. 96 (1994), 388-391.

**) Trockengesponnene Vergleichsfaser aus Diphenylmethan-4,4'-diisocyanat und Polyetherglykol sowie Ethylendiamin als Kettenverlängerer.

Die Tabelle 1 zeigt, daß die Bestrahlung zu verbesserten fasermechanischen Eigenschaften führt.

Die Tabelle 2 zeigt die hervorragenden mechanischen Eigenschaften der erfindungsgemäßen schmelzgesponnen Fasern im Vergleich zu der handelsüblichen trockengesponnenen und der naßgesponnenen Vergleichsfaser. Die erfindungsgemäße Faser zeigt bereits unbestrahlt deutlich geringere Restdehnung und eine geringere Kennzahl $b_{w.5}$ als die handelsübliche Faser. Die naßgesponnene Vergleichsfaser zeigt sowohl unbestrahlt als auch bestrahlt deutlich ungünstigere Restdehnungen.

Beispiel 5

*A) Prepolymerdarstellung*

16,8 g HDI (0,1 mol) wurden beim Raumtemperatur zu 100 g Polyesterdiol (Kurapol P 2010 mw = 2000g/mol) (0,05 mol) gegeben und unter kräftigem Rühren auf 130°C erwärmt. Zur Vervollständigung der Reaktion wurde 1,5 Stunden lang weiter bei dieser Temperatur gerührt. Nach Beendigung dieser Reaktion wurde das Reaktionsgemisch auf Raumtemperatur abgekühlt, der Restisocyanatgehalt titrimetisch bestimmt und daraus die benötigte Menge an Kettenverlängerer berechnet. Für den vorliegenden Ansatz ergab sich ein Restisocyanatgehalt von 3,5 Gew.-%. Bei Einsatz von Butendiol als Kettenverlängerer betrugt die daraus berechnete Menge an Kettenverlängerer 4,29 g Butendiol (0,049 mol). Dies entspricht einem OH/NCO-Verhältnis von 1:1.

Die erhaltenen Prepolymere können direkt mit dem Kettenverlängerer umgesetzt oder unter Argon-Atmosphäre mehrere Wochen gelagert werden.

*B) Kettenverlängerungsschritt:*

116 g Prepolymer wurden in einem Teflongefäß vorgelegt und auf 70°C erwärmt. Die berechnete Menge an Butendiol (4,29 g) wurde unter kräftigem Rühren zugegeben. Zusätzlich wurden 25 ppm Dibutylzinndiacetat zugefügt. Das Reaktionsgemisch wurde weitere 20 min gerührt, wobei die Viskosität stark zunahm. Zur Vervollständigung der Reaktion wurde das Polymer bei 70°C 70 Stunden lang temperiert.

Bei dem butindiol- und butandiolverlängerten Polyurethan wurde analog verfahren. Durch Variation des Molverhältnisses von Kurapol / HDI / Diol wurden Polyurethane mit verschiedenem Hartsegmentgehalt hergestellt. Die

Polyurethane mit höherem Hartsegmentgehalt wurden in einem One Shot-Verfahren hergestellt. Beim One Shot-Verfahren wird das Makrodiol vorgelegt und auf 60°C erhitzt. Anschließend wird die berechnete Menge an Diisocyanat in einem Zeitraum von 15 min unter Rühren zugegeben. Anschließend wird die benötigte Menge an Kettenverlängerer, in der zuvor der Katalysator (Dibutylzinndiacetat) aufgelöst worden war, in einem Zeitraum von 15 min unter Rühren zugegeben. Danach wird je nach Reaktivität des Kettenverlängerers bei 80 bis 120°C 60 min lang ausgehärtet.

Aus den hergestellten Polyurethanen wurden schmelzgesponnene Fasern hergestellt. Die Spinnparameter waren: Födermenge 1,04 g/min; Abzugsgeschwindigkeit 6-11,2 m/min; Verweilzeit 0,5 h; Titer 900-1700 dtex; Spinntemperatur 110-160°C im Bereich des jeweiligen Schmelzpeakmaximums. Die hergestellten Fasern wurden einer Elektronenbestrahlung mit einer Strahlungsdosis im Bereich von 0-200 kGy unterzogen. Anschließend wurden die Temperaturbeständigkeit (HDT-Temperatur) sowie die mechanischen Eigenschaften (Restdehnung, Reißkraft) der Polyurethane bestimmt. Zur Bestimmung der HDT wurde das Gerät DMA7 der Firma Perkin Elmer eingesetzt. Die Fasern wurden in den Faserhalter eingespannt und im TMA-Modus untersucht. Die Aufheizrate betrug 5°C/min, der Temperaturbereich 20°C bis 200°C und die Belastungskraft 0,002 cN/dtex. Als HDT-Temperatur wurde die Temperatur aufgezeichnet, bei der die Steigung 0,8% Dehnung pro °C beträgt. In den folgenen Tabellen und Figuren sind die Meßergebnisse aufgeführt.

| **Mol-Verhältnis Kurapol / HDI / Diol** | **Hartsegmentgehalt [Gew.-%] [4]** | **Herstellungsverfahren** |
|---|---|---|
| 2 / 3 / 1 | 6 | Prepolymer |
| 1 / 2 / 1 | 11 | Prepolymer |
| 1 / 2,5 / 1,5 | 15 | One Shot |
| 1 / 3 / 2 | 19 | One Shot |
| 1 / 4 / 3 | 26 | One Shot |

| **Mol-Verhältnis:** Kurapol P 2010/ HDI / Diol | Herstellungsverfahren | η rel [1] Kurapol/HDI/ **Butandiol** | η rel [1] Kurapol/HDI/ **Butendiol** | η rel [1] Kurapol/HDI/ **Butindiol** |
|---|---|---|---|---|
| 2 / 3 / 1 (6%) | Prepolymer | -[2] | 2,37 [3] | 2,30 [3] |
| 1 / 2 / 1 (11%) | Prepolymer | -[2] | 1,93 [3] | 1,81 [3] |
| 1 / 2,5 / 1,5 (15%) | One Shot | -[2] | - | 1,44 |
| 1 / 3 / 2 (19%) | One Shot | -[2] | 1,39 | 1,30 |
| 1 / 4 / 3 (26%) | One Shot | -[2] | 1,38 | 1,40 |

[1] 0,5 Gew.-% in DMA
[2] Polymer ist unlöslich
[3] Polymer größtenteils gelöst, gequollene Partikel wurden abfiltriert.
[4] berechnet nach folgender Formel: $\%HS = \frac{1}{m}\,[n(Kv) \cdot MW(DI) + m(Kv)] \cdot 100$
mit: n(Kv) = Stoffmenge an Kettenverlängerer [mol];
MW(DI) = Molekulargewicht des Diisocyanats;
m(Kv) = Masse des Kettenverlängerers [g];
m = Masse des Gesamtansatzes [g].

| HDT-Temperatur | | | | | |
|---|---|---|---|---|---|
| Kettenverlängerer (HS) | Strahlungsdosis (kGy) | | | | |
| | 0 | 50 | 100 | 150 | 200 |
| Butandiol (11%) | 100 | 87 | 88 | 79 | 67 |
| Butendiol (19%) | 108 | --- | 115 | --- | 180 |
| Butindiol (15%) | 84 | --- | 158 | --- | 175 |

Man erkennt, daß sich die HDT des butandiolverlängerten Polyurethans mit steigender Strahlungsdosis verschlechtert. Die HDT des butendiol- bzw. butindiolverlängerten Polyurethans wird durch Bestrahlung dagegen deutlich erhöht.

Die Figuren 1 und 2 zeigen, daß die ESH-Bestrahlung einer butandiolverlängerten Faser (mit 11 Gew.-% Hartsegmentgehalt) zu einer Verschlechterung der mechanischen Eigenschaften führt. Figur 1 zeigt, daß mit zunehmender Strahlungsdosis die Restdehnung zunimmt. Figur 2 zeigt, daß Reißdehnung und Reißkraft mit zunehmender Strahlungsdosis abnehmen. Diese Verschlechterung der mechanischen Eigenschaften ist auf eine Faserschädigung durch Kettenbruch zurückzuführen.

Die Figuren 3 und 4 zeigen, daß bei einer butindiolverlängerten Faser hingegen durch Bestrahlung die Werte der Restdehnung nach dem ersten und fünften Dehnungszyclus verbessert werden. Die Bestrahlung führt zu einer kovalenten Vernetzung der Hartsegmente, die ein Abgleiten der Ketten bei Dehnung verhindert.

Die Figuren 5 und 6 zeigen, daß auch bei einer butendiolverlängerten Polyurethanfaser die mechanischen Eigenschaften durch Bestrahlung verbessert werden können. Figur 5 zeigt, daß nach Bestrahlung im Vergleich zur unbestrahlten Faser niedrigere Werte für die Restdehnung erhalten werden. Figur 6 zeigt, daß die Werte der Reißdehnung und Reißkraft bei Bestrahlung mit niedrigen Strahlungsdosen zunächst zunehmen, über 100 kGy aber abfallen.

## Patentansprüche

**1.** Elastomere Fasern, dadurch erhältlich, daß man

(a) ein Polyurethan-Elastomer, enthaltend Struktureinheiten des Typs:

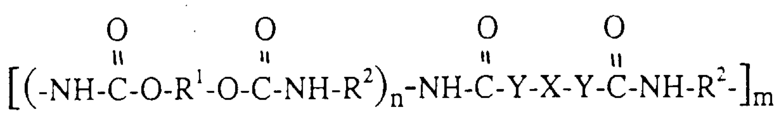

,

worin bedeuten:

die Gruppierung -O-$R^1$-O- einen Makrodiol-Rest eines Molekulargewichts von 500 bis 10000,
$R^2$ einen zweiwertigen aliphatischen, cycloaliphatischen und/oder aliphatisch-cycloaliphatischen Rest und
X einen olefinisch ungesättigten Rest, wobei die flankierenden Gruppen maximal 14 Bindungen voneinander entfernt sind,
Y NH oder O sowie
n eine ganze Zahl von 1 bis 10 und
m eine ganze Zahl von mindestens 4,

zu einer Faser schmelzverspinnt und

(b) die erhaltene Faser energiereichen Strahlen aussetzt, um das Polyurethan-Elastomer zumindest teilweise zu vernetzen.

**2.** Elastomere Fasern nach Anspruch 1, dadurch gekennzeichnet, daß die in Schritt (a) erhaltene Faser mit Elektronenstrahlen oder UV-Strahlen behandelt wird.

**3.** Elastomere Fasern nach Anspruch 1 oder 2, dadurch gekennzeichnet, daß das Makrodiol ein Molekulargewicht von 1000 bis 3000 aufweist.

**4.** Elastomere Fasern nach Anspruch 1, 2 oder 3, dadurch gekennzeichnet, daß das Makrodiol ein Polyetherglykol und/oder ein Polyesterglykol ist.

**5.** Elastomere Fasern nach Anspruch 4, dadurch gekennzeichnet, daß das Polyetherglykol ein Polyalkylenglykol ist.

**6.** Elastomere Fasern nach Anspruch 5, dadurch gekennzeichnet, daß das Polyalkylenglykol ein Polyethylenglykol, Polypropylenglykol und/oder Polytetramethylenglykol ist.

**7.** Elastomere Fasern nach Anspruch 4, dadurch gekennzeichnet, daß das Polyesterglykol der Polyester einer aliphatischen und/oder cycloaliphatischen Dicarbonsäure und eines Diols ist.

**8.** Elastomere Fasern nach Anspruch 7, dadurch gekennzeichnet, daß die Dicarbonsäure Succinsäure, Glutarsäure, Adipinsäure, Pimelinsäure, Azelainsäure und/oder Sebacinsäure ist.

**9.** Elastomere Fasern nach Anspruch 7, dadurch gekennzeichnet, daß das Diol Ethylenglykol, Diethylenglykol, Triethylenglykol, Propylenglykol, 1,4-Butandiol, 1,5-Pentandiol und/oder 1,6-Hexandiol ist.

**10.** Elastomere Fasern nach mindestens einem der vorhergehenden Ansprüche, dadurch gekennzeichnet, daß der Rest $R^2$ eine Alkylengruppe mit 2 bis 14 Kohlenstoffatomen, eine Cycloalkylengruppe mit 5 bis 8 Kohlenstoffatomen und/oder eine aliphatisch-cycloaliphatische Gruppe mit 7 bis 24 Kohlenstoffatomen ist.

**11.** Elastomere Fasern nach Anspruch 10, dadurch gekennzeichnet, daß der Rest $R^2$ auf ein Diisocyanat in Form von Hexamethylendiisocyanat und/oder Dicyclohexylmethan-4,4'-diisocyanat zurückgeht.

**12.** Elastomere Fasern nach mindestens einem der vorhergehenden Ansprüche, dadurch gekennzeichnet, daß der olefinisch ungesättigte Rest auf ein Diaminoalken, Diaminoalkin und/oder Diaminocycloalken zurückgeht.

**13.** Elastomere Fasern nach Anspruch 12, dadurch gekennzeichnet, daß das Diaminoalken cis- oder trans-1,4-Diaminobut-2-en, cis- oder trans-4,4'-Diaminostilben und/oder Diaminomaleinsäuredinitril, das Diaminoalkin 1,4-Diaminobut-2-in und das Diaminocycloalken 3,6-Diaminocyclohexen-(1) ist.

**14.** Elastomere Fasern nach mindestens einem der Ansprüche 1 bis 11, dadurch gekennzeichnet, daß der olefinisch ungesättigte Rest auf ein Alkendiol, Alkindiol und/oder Cycloalkendiol zurückgeht.

**15.** Elastomere Fasern nach Anspruch 14, dadurch gekennzeichnet, daß das Alkendiol cis- oder trans-1,4-But-2-endiol, das Alkindiol 1,4-But-2-indiol und das Cycloalkendiol 5,6-Bis-(hydroxymethyl)-bicyclo[2.2.1.]hepten-2 ist.

**16.** Elastomere Fasern nach mindestens einem der vorhergehenden Ansprüche, dadurch gekennzeichnet, daß es Zusatzstoffe in Form von Mattierungsmitteln, Farbpigmenten, Antioxidationsmitteln, Thermostabilisatoren, Foto- bzw. UV-Stabilisatoren und/oder Hydrolysestabilisatoren enthält.

**17.** Polyurethan-Elastomer, enthaltend Struktureinheiten des Typs

$$\left[\left(-NH-\overset{\overset{O}{\|}}{C}-O-R^1-O-\overset{\overset{O}{\|}}{C}-NH-R^2\right)_n-NH-\overset{\overset{O}{\|}}{C}-Y-X-Y-\overset{\overset{O}{\|}}{C}-NH-R^2-\right]_m ,$$

worin bedeuten:

die Gruppierung $-O-R^1-O-$ einen Makrodiol-Rest eines Molekulargewichts von 500 bis 10000,
$R^2$ einen zweiwertigen aliphatischen, cycloaliphatischen und/oder aliphatisch-cycloaliphatischen Rest und
X einen olefinisch ungesättigten Rest, wobei die flankierenden Gruppen maximal 14 Bindungen voneinander entfernt sind,
Y NH sowie
n eine ganze Zahl von 1 bis 10 und
m eine ganze Zahl von mindestens 4.

**18.** Polyurethan-Elastomer nach Anspruch 17, dadurch gekennzeichnet, daß das Makrodiol ein Molekulargewicht von 1000 bis 3000 aufweist.

**19.** Polyurethan-Elastomer nach Anspruch 17 oder 18, dadurch gekennzeichnet, daß das Makrodiol ein Polyetherglykol und/oder ein Polyesterglykol ist.

**20.** Polyurethan-Elastomer nach Anspruch 19, dadurch gekennzeichnet, daß das Polyetherglykol ein Polyalkylenglykol ist.

**21.** Polyurethan-Elastomer nach Anspruch 20, dadurch gekennzeichnet, daß das Polyalkylenglykol ein Polyethylenglykol, Polypropylenglykol und/oder Polytetramethylenglykol ist.

**22.** Polyurethan-Elastomer nach Anspruch 19, dadurch gekennzeichnet, daß das Polyesterglykol der Polyester einer aliphatischen und/oder cycloaliphatischen Dicarbonsäure und eines Diols ist.

**23.** Polyurethan-Elastomer nach Anspruch 22, dadurch gekennzeichnet, daß die Dicarbonsäure Succinsäure, Glutarsäure, Adipinsäure, Pimelinsäure, Azelainsäure und/oder Sebacinsäure ist.

**24.** Polyurethan-Elastomer nach Anspruch 22, dadurch gekennzeichnet, daß das Diol Ethylenglykol, Diethylenglykol, Triethylenglykol, Propylenglykol, 1,4-Butandiol, 1,5-Pentandiol und/oder 1,6-Hexandiol ist.

**25.** Polyurethan-Elastomer nach mindestens einem der Ansprüche 17 bis 24, dadurch gekennzeichnet, daß der Rest $R^2$ eine Alkylengruppe mit 2 bis 14 Kohlenstoffatomen, eine Cycloalkylengruppe mit 5 bis 8 Kohlenstoffatomen und/oder eine aliphatisch-cycloaliphatische Gruppe mit 7 bis 24 Kohlenstoffatomen ist.

**26.** Polyurethan-Elastomer nach Anspruch 25, dadurch gekennzeichnet, daß der Rest $R^2$ auf ein Diisocyanat in Form von Hexamethylendiisocyanat und/oder Dicyclohexylmethan-4,4'-diisocyanat zurückgeht.

**27.** Polyurethan-Elastomer nach mindestens einem der Ansprüche 17 bis 26, dadurch gekennzeichnet, daß der olefinisch ungesättigte Rest auf ein Diaminoalken, Diaminoalkin und/oder Diaminocycloalken zurückgeht.

**28.** Polyurethan-Elastomer nach Anspruch 27, dadurch gekennzeichnet, daß das Diaminoalken cis- oder trans-1,4-Diaminobut-2-en, cis- oder trans-4,4'-Diaminostilben und/oder Diaminomaleinsäuredinitril, das Diaminoalkin 1,4-Diaminobut-2-in und das Diaminocycloalken 3,6-Diaminocyclohexen-(1) ist.

**29.** Polyurethan-Elastomer nach mindestens einem der Ansprüche 17 bis 28, dadurch gekennzeichnet, daß mindestens zwei Polyurethanketten über den Rest X kovalent miteinander vernetzt sind.

**30.** Polyurethan -Elastomer nach mindestens einem der vorhergehenden Ansprüche 17 bis 29, dadurch gekennzeichnet, daß es Zusatzstoffe in Form von Mattierungsmitteln, Farbpigmenten, Antioxidationsmitteln, Thermostabilisatoren, Foto- bzw. UV-Stabilisatoren und/oder Hydrolysestabilisatoren enthält.

**31.** Verfahren zur Herstellung eines Polyurethan-Elastomers nach mindestens einem der Ansprüche 17 bis 29, dadurch gekennzeichnet, daß

a) das Makrodiol mit einem Diisocyanat OCN-$R^2$-NCO in einem Molverhältnis von 1:5 bis 1:1,1 zu einem Prepolymer umgesetzt wird und
b) die Isocyanatgruppen des Prepolymers mit einem olefinisch ungesättigten Diamin umgesetzt werden.

**32.** Verfahren nach Anspruch 31, dadurch gekennzeichnet, daß der Schritt a) in Abwesenheit von Lösungsmitteln und der Schritt b) in Gegenwart eines Lösungsmittels durchgeführt wird.

**33.** Verfahren nach Anspruch 31, dadurch gekennzeichnet, daß der Schritt b) in Dimethylformamid und/oder Dimethylacetamid durchgeführt wird.

**34.** Verfahren nach nach mindestens einem der Ansprüche 31 bis 33, dadurch gekennzeichnet, daß im Schritt b) das Prepolymer zu dem Diamin gegeben wird.

**35.** Verfahren nach Anspruch 31, dadurch gekennzeichnet, daß die Schritte a) und b) in Abwesenheit von Lösungsmitteln durchgeführt werden.

**36.** Verfahren nach mindestens einem der Ansprüche 31 bis 35, dadurch gekennzeichnet, daß das Molverhältnis von Makrodiol zu Diisocyanat beim Schritt a) zwischen 1:2 und 1:1,5 liegt.

**37.** Verfahren nach mindestens einem der Ansprüche 31 bis 36, dadurch gekennzeichnet, daß im Schritt b) ein Polyadditionskatalysator eingesetzt wird.

**38.** Verwendung des Polyurethan-Elastomers nach mindestens einem der Ansprüche 17 bis 29 zum Schmelzextrudieren zu Folien oder zum Schmelzverspinnen zu einer Faser.

**39.** Verwendung nach Anspruch 38, dadurch gekennzeichnet, daß die erhaltene Faser bzw. die erhaltene Folie energiereichen Strahlen ausgesetzt wird, um das Polyurethan-Elastomer zumindest teilweise zu vernetzen.

**40.** Verwendung nach Anspruch 39, dadurch gekennzeichnet, daß die Faser bzw. die Folie mit Elektronenstrahlen oder UV-Strahlen behandelt wird.

## Claims

**1.** Elastomeric fibres obtainable by

(a) melt-spinning a polyurethane elastomer containing structural units of the type:

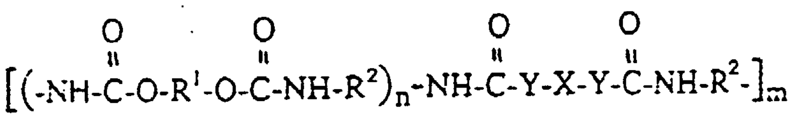

where:

the grouping -O-$R^1$-O- is a macrodiol radical having a molecular weight of 500 to 10,000,
$R^2$ is a bivalent aliphatic, cycloaliphatic and/or aliphatic-cycloaliphatic radical,
X is an olefinically unsaturated radical where the flanking groups are not more than 14 bonds apart, Y is NH or O,
n is an integer from 1 to 10 and
m is an integer of at least 4,

into a fibre and
(b) exposing the fibre obtained to high-energy rays to at least partially crosslink the polyurethane elastomer.

**2.** Elastomeric fibres according to Claim 1, characterized in that the fibre obtained in step (a) is treated with electron beams or UV rays.

**3.** Elastomeric fibres according to Claim 1 or 2, characterized in that the macrodiol has a molecular weight of 1000 to 3000.

**4.** Elastomeric fibres according to Claim 1, 2, or 3, characterized in that the macrodiol is a polyether glycol and/or a polyester glycol.

**5.** Elastomeric fibres according to Claim 4, characterized in that the polyether glycol is a polyalkylene glycol.

**6.** Elastomeric fibres according to Claim 5, characterized in that the polyalkylene glycol is a polyethylene glycol, polypropylene glycol and/or polytetramethylene glycol.

**7.** Elastomeric fibres according to Claim 4, characterized in that the polyester glycol is the polyester of an aliphatic and/or cycloaliphatic dicarboxylic acid and of a diol.

**8.** Elastomeric fibres according to Claim 7, characterized in that the dicarboxylic acid is succinic acid, glutaric acid, adipic acid, pimelic acid, azelaic acid and/or sebacic acid.

**9.** Elastomeric fibres according to Claim 7, characterized in that the diol is ethylene glycol, diethylene glycol, triethylene glycol, propylene glycol, 1,4-butanediol, 1,5-pentanediol and/or 1,6-hexanediol.

**10.** Elastomeric fibres according to at least one of the preceding claims, characterized in that the radical $R^2$ is an alkylene group having 2 to 14 carbon atoms, a cycloalkylene group having 5 to 8 carbon atoms and/or an aliphatic-cycloaliphatic group having 7 to 24 carbon atoms.

**11.** Elastomeric fibres according to Claim 10, characterized in that the radical $R^2$ is derived from a diisocyanate in the form of hexamethylene diisocyanate and/or dicyclohexylmethane 4,4'-diisocyanate.

**12.** Elastomeric fibres according to at least one of the preceding claims, characterized in that the olefinically unsaturated radical is derived from a diaminoalkene, diaminoalkyne and/or diaminocycloalkene.

**13.** Elastomeric fibres according to Claim 12, characterized in that the diaminoalkene is cis- or trans-1,4-diaminobut-2-ene, cis- or trans-4,4'-diaminostilbene and/or diaminomaleonitrile, the diaminoalkyne is 1,4-diaminobut-2-yne and the diaminocycloalkene is 3,6-diaminocyclohex-1-ene.

**14.** Elastomeric fibres according to at least one of Claims 1 to 11, characterized in that the olefinically unsaturated radical is derived from an alkenediol, alkynediol and/or cycloalkenediol.

**15.** Elastomeric fibres according to Claim 14, characterized in that the alkenediol is cis- or trans-1,4-but-2-enediol, the alkynediol is 1,4-but-2-ynediol and the cycloalkenediol is 5,6-bis(hydroxymethyl)bicyclo[2.2.1]hept-2-ene.

**16.** Elastomeric fibres according to at least one of the preceding claims, characterized in that they contain additives in the form of delustrants, colour pigments, antioxidants, thermostabilizers, photo- or UV-stabilizers and/or hydrolysis stabilizers.

**17.** Polyurethane elastomer containing structural units of the type:

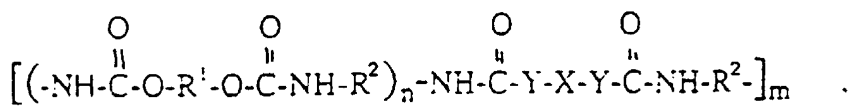

where:

the grouping -O-$R^1$-O- is a macrodiol radical having a molecular weight of 500 to 10,000,
$R^2$ is a bivalent aliphatic, cycloaliphatic and/or aliphatic-cycloaliphatic radical,
X is an olefinically unsaturated radical where the flanking groups are not more than 14 bonds apart,
Y is NH,
n is an integer from 1 to 10 and
m is an integer of at least 4.

**18.** Polyurethane elastomer according to Claim 17, characterized in that the macrodiol has a molecular weight of 1000 to 3000.

**19.** Polyurethane elastomer according to Claim 17 or 18, characterized in that the macrodiol is a polyether glycol and/or a polyester glycol.

**20.** Polyurethane elastomer according to Claim 19, characterized in that the polyether glycol is a polyalkylene glycol.

**21.** Polyurethane elastomer according to Claim 20, characterized in that the polyalkylene glycol is a polyethylene glycol, polypropylene glycol and/or polytetramethylene glycol.

**22.** Polyurethane elastomer according to Claim 19, characterized in that the polyester glycol is the polyester of an aliphatic and/or cycloaliphatic dicarboxylic acid and of a diol.

**23.** Polyurethane elastomer according to Claim 22, characterized in that the dicarboxylic acid is succinic acid, glutaric acid, adipic acid, pimelic acid, azelaic acid and/or sebacic acid.

**24.** Polyurethane elastomer according to Claim 22, characterized in that the diol is ethylene glycol, diethylene glycol, triethylene glycol, propylene glycol, 1,4-butanediol, 1,5-pentanediol and/or 1,6-hexanediol.

**25.** Polyurethane elastomer according to at least one of Claims 17 to 24, characterized in that the radical $R^2$ is an alkylene group having 2 to 14 carbon atoms, a cycloalkylene group having 5 to 8 carbon atoms and/or an aliphatic-cycloaliphatic group having 7 to 24 carbon atoms.

**26.** Polyurethane elastomer according to Claim 25, characterized in that the radical $R^2$ is derived from a diisocyanate in the form of hexamethylene diisocyanate and/or dicyclohexylmethane 4,4'-diisocyanate.

**27.** Polyurethane elastomer according to at least one of Claims 17 to 26, characterized in that the olefinically unsaturated radical is derived from a diaminoalkene, diaminoalkyne and/or diaminocycloalkene.

**28.** Polyurethane elastomer according to Claim 27, characterized in that the diaminoalkene is cis- or trans-1,4-diaminobut-2-ene, cis- or trans-4,4'-diaminostilbene and/or diaminomaleonitrile, the diaminoalkyne is 1,4-diaminobut-2-yne and the diaminocycloalkene is 3,6-diaminocyclohex-1-ene.

**29.** Polyurethane elastomer according to at least one of Claims 17 to 28, characterized in that at least two polyurethane chains are covalently crosslinked with each other via the radical X.

**30.** Polyurethane elastomer according to at least one of the preceding claims 17 to 29, characterized in that it contains additives in the form of delustrants, colour pigments, antioxidants, thermostabilizers, photo- or UV-stabilizers and/or hydrolysis stabilizers.

**31.** Process for preparing a polyurethane elastomer according to at least one of Claims 17 to 29, characterized in that

a) the macrodiol is reacted with a diisocyanate OCN-$R^2$-NCO in a molar ratio of 1:5 to 1:1.1 to form a prepolymer and
b) the isocyanate groups of the prepolymer are reacted with an olefinically unsaturated diamine.

**32.** Process according to Claim 31, characterized in that step a) is carried out in the absence of solvents and step b) in the presence of a solvent.

**33.** Process according to Claim 31, characterized in that step b) is carried out in dimethylformamide and/or dimethylacetamide.

**34.** Process according to at least one of Claims 31 to 33, characterized in that the prepolymer is added to the diamine in step b).

**35.** Process according to Claim 31, characterized in that steps a) and b) are carried out in the absence of solvents.

**36.** Process according to at least one of Claims 31 to 35, characterized in that the molar ratio of macrodiol to diisocyanate in step a) is between 1:2 and 1:1.5.

**37.** Process according to at least one of Claims 31 to 36, characterized in that a polyaddition catalyst is used in step b).

**38.** Use of the polyurethane elastomer according to at least one of Claims 17 to 29 for melt-extruding into films or for melt-spinning into a fibre.

**39.** Use according to Claim 38, characterized in that the fibre or film obtained is exposed to high-energy rays to at least partially crosslink the polyurethane elastomer.

**40.** Use according to Claim 39, characterized in that the fibre or film is treated with electron beams or UV rays.

## Revendications

**1.** Fibres élastomères pouvant être obtenues au moyen des étapes suivantes :

(a) filer à l'état fondu un élastomère de polyuréthanne contenant des unités structurelles du type :

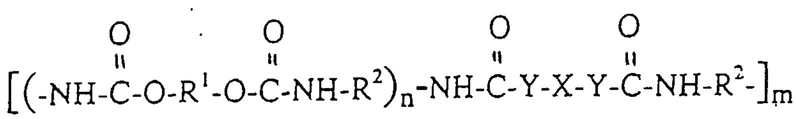

,

dans lesquelles :

le groupement -O-$R^1$-O- représente un reste macrodiol d'un poids moléculaire de 500 à 10000,
$R^2$ représente un reste bivalent aliphatique, cycloaliphatique et/ou aliphatique-cycloaliphatique et
X représente un reste oléfiniquement insaturé, les groupes adjacents étant espacés entre eux par 14 liaisons au maximum,
Y représente NH ou O,
n est un nombre entier de 1 à 10 et
m est un nombre entier d'au moins 4,

pour obtenir une fibre et
(b) soumettre la fibre obtenue à des rayons à haute énergie pour réticuler au moins partiellement l'élastomère de polyuréthanne.

**2.** Fibres élastomères selon la revendication 1, caractérisées en ce qu'on traite la fibre obtenue dans l'étape (a) avec des faisceaux d'électrons ou avec des rayons UV.

**3.** Fibres élastomères selon la revendication 1 ou 2, caractérisées en ce que le macrodiol présente un poids moléculaire de 1000 à 3000.

**4.** Fibres élastomères selon la revendication 1, 2 ou 3, caractérisées en ce que le macrodiol est un polyétherglycol et/ou un polyesterglycol.

**5.** Fibres élastomères selon la revendication 4, caractérisées en ce que le polyétherglycol est un polyalkylèneglycol.

**6.** Fibres élastomères selon la revendication 5, caractérisées en ce que le polyalkylèneglycol est un polyéthylèneglycol, un polypropylèneglycol et/ou un polytétraméthylèneglycol.

**7.** Fibres élastomères selon la revendication 4, caractérisées en ce que le polyesterglycol est le polyester d'un acide dicarboxylique aliphatique et/ou cycloaliphatique et d'un diol.

**8.** Fibres élastomères selon la revendication 7, caractérisées en ce que l'acide dicarboxylique est l'acide succinique, l'acide glutarique, l'acide adipique, l'acide pimélique, l'acide azélaïque et/ou l'acide sébacique.

**9.** Fibres élastomères selon la revendication 7, caractérisées en ce que le diol est l'éthylèneglycol, le diéthylèneglycol, le triéthylèneglycol, le propylèneglycol, le 1,4-butanediol, le 1,5-pentanediol et/ou le 1,6-hexanediol.

**10.** Fibres élastomères selon au moins l'une des revendications précédentes, caractérisées en ce que le reste $R^2$ est un groupe alkylène ayant de 2 à 14 atomes de carbone, un groupe cycloalkylène ayant de 5 à 8 atomes de carbone et/ou un groupe aliphatique-cycloaliphatique ayant de 7 à 24 atomes de carbone.

**11.** Fibres élastomères selon la revendication 10, caractérisées en ce que le reste $R^2$ se rapporte à un diisocyanate sous la forme d'hexaméthylènediisocyanate et/ou de dicyclohexylméthane-4,4'-diisocyanate.

**12.** Fibres élastomères selon au moins l'une des revendications précédentes, caractérisées en ce que le reste oléfiniquement insaturé se rapporte à un diaminoalcène, un diaminoalcyne et/ou un diaminocycloalcène.

**13.** Fibres élastomères selon la revendication 12, caractérisées en ce que le diaminoalcène est le cis- ou trans-1,4-diaminobut-2-ène, le cis- ou trans-4,4'-diaminostilbène et/ou le diaminomaléodinitrile, le diaminoalcyne est le 1,4-diaminobut-2-yne, et le diaminocycloalcène est le 3,6-diaminocyclohexène-(1).

**14.** Fibres élastomères selon au moins l'une des revendications 1 à 11, caractérisées en ce que le reste oléfiniquement insaturé se rapporte à un alcènediol, un alcynediol et/ou un cycloalcènediol.

**15.** Fibres élastomères selon la revendication 14, caractérisées en ce que l'alcènediol est un cis- ou trans-1,4-but-2-ènediol, l'alcynediol est le 1,4-but-2-ynediol, et le cycloalcènediol est le 5,6-bis-(hydroxyméthyl)bicyclo[2.2.1] heptène-2.

**16.** Fibres élastomères selon au moins l'une des revendications précédentes, caractérisées en ce qu'elles contiennent des additifs sous la forme d'agents de matage, de pigments colorés, d'anti-oxydants, de stabilisants thermiques, de photostabilisants ou de stabilisants vis-à-vis des rayons UV et/ou de stabilisants vis-à-vis de l'hydrolyse.

**17.** Elastomère de polyuréthanne contenant des unités structurelles du type :

$$[(-NH-\overset{\overset{O}{\|}}{C}-O-R^1-O-\overset{\overset{O}{\|}}{C}-NH-R^2)_n-NH-\overset{\overset{O}{\|}}{C}-Y-X-Y-\overset{\overset{O}{\|}}{C}-NH-R^2-]_m \quad ,$$

où :

le groupement -O-$R^1$-O- représente un reste macrodiol d'un poids moléculaire de 500 à 10 000,
$R^2$ représente un reste bivalent aliphatique, cycloaliphatique et/ou aliphatique-cycloaliphatique et
X représente un reste oléfiniquement insaturé, les groupes adjacents étant espacés entre eux par 14 liaisons au maximum,
Y représente NH,
n est un nombre entier de 1 à 10 et
m est un nombre entier d'au moins 4.

**18.** Elastomère de polyuréthanne selon la revendication 17, caractérisé en ce que le macrodiol a un poids moléculaire de 1000 à 3000.

**19.** Elastomère de polyuréthanne selon la revendication 17 ou 18, caractérisé en ce que le macrodiol est un polyétherglycol et/ou un polyesterglycol.

**20.** Elastomère de polyuréthanne selon la revendication 19, caractérisé en ce que le polyétherglycol est un polyalkylèneglycol.

**21.** Elastomère de polyuréthanne selon la revendication 20, caractérisé en ce que le polyalkylèneglycol est un polyéthylèneglycol, polypropylèneglycol et/ou polytétraméthylèneglycol.

**22.** Elastomère de polyuréthanne selon la revendication 19, caractérisé en ce que le polyesterglycol est le polyester d'un acide dicarboxylique aliphatique et/ou cycloaliphatique et d'un diol.

**23.** Elastomère de polyuréthanne selon la revendication 22, caractérisé en ce que l'acide dicarboxylique est l'acide succinique, l'acide glutarique, l'acide adipique, l'acide pimélique, l'acide azélaïque et/ou l'acide sébacique.

**24.** Elastomère de polyuréthanne selon la revendication 22, caractérisé en ce que le diol est l'éthylèneglycol, le diéthylèneglycol, le triéthylèneglycol, le propylèneglycol, le 1,4-butanediol, le 1,5-pentanediol et/ou le 1,6-hexanediol.

**25.** Elastomère de polyuréthanne selon au moins l'une des revendications 17 à 24, caractérisé en ce que le reste $R^2$ est un groupe alkylène ayant de 2 à 14 atomes de carbone, un groupe cycloalkylène ayant de 5 à 8 atomes de

carbone et/ou un groupe aliphatique-cycloaliphatique ayant de 7 à 24 atomes de carbone.

**26.** Elastomère de polyuréthanne selon la revendication 25, caractérisé en ce que le reste $R^2$ se rapporte à un diisocyanate sous la forme d'hexaméthylènediisocyanate et/ou de dicyclohexylméthane-4,4'-diisocyanate.

**27.** Elastomère de polyuréthanne selon au moins l'une des revendications 17 à 26, caractérisé en ce que le reste oléfiniquement insaturé se rapporte à un diaminoalcène, un diaminoalcyne et/ou un diaminocycloalcène.

**28.** Elastomère de polyuréthanne selon la revendication 27, caractérisé en ce que le diaminoalcène est le cis- ou trans-1,4-diaminobut-2-ène, le cis- ou trans-4,4'-diaminostilbène et/ou le diaminomaléodinitrile, le diaminoalcyne est le 1,4-diaminobut-2-yne, et le diaminocycloalcène est le 3,6-diaminocyclohexène-(1).

**29.** Elastomère de polyuréthanne selon au moins l'une des revendications 17 à 28, caractérisé en ce qu'au moins deux chaînes de polyuréthanne sont réticulées entre elles par covalence au moyen du reste X.

**30.** Elastomère de polyuréthanne selon au moins l'une des revendications 17 à 29 précédentes, caractérisé en ce qu'il contient des additifs sous la forme d'agents de matage, de pigments colorés, d'anti-oxydants, de stabilisants thermiques, de photostabilisants ou de stabilisants vis-à-vis des rayons UV et/ou de stabilisants vis-à-vis de l'hydrolyse.

**31.** Procédé de préparation d'un élastomère de polyuréthanne selon au moins l'une des revendications 17 à 29, caractérisé en ce que :

a) on fait réagir le macrodiol avec un diisocyanate OCN-$R^2$-NCO dans un rapport molaire de 1:5 à 1:1,1 pour obtenir un prépolymère et
b) on fait réagir les groupes isocyanate du prépolymère avec une diamine oléfiniquement insaturée.

**32.** Procédé selon la revendication 31, caractérisé en ce qu'on effectue l'étape a) en l'absence de solvants et l'étape b) en présence d'un solvant.

**33.** Procédé selon la revendication 31, caractérisé en ce qu'on effectue l'étape b) dans du diméthylformamide et/ou dans du diméthylacétamide.

**34.** Procédé selon au moins l'une des revendications 31 à 33, caractérisé en ce qu'on ajoute le prépolymère à la diamine dans l'étape b).

**35.** Procédé selon la revendication 31, caractérisé en ce qu'on effectue les étapes a) et b) en l'absence de solvants.

**36.** Procédé selon au moins l'une des revendications 31 à 35, caractérisé en ce que le rapport molaire du macrodiol au diisocyanate dans l'étape a) est compris entre 1:2 et 1:1,5.

**37.** Procédé selon au moins l'une des revendications 31 à 36, caractérisé en ce qu'on utilise un catalyseur de polyaddition dans l'étape b).

**38.** Utilisation de l'élastomère de polyuréthanne selon au moins l'une des revendications 17 à 29 pour son extrusion à l'état fondu pour obtenir des feuilles ou pour son filage à l'état fondu pour obtenir une fibre.

**39.** Utilisation selon la revendication 38, caractérisée en ce qu'on soumet la fibre obtenue ou la feuille obtenue à des rayons à haute énergie pour réticuler au moins partiellement l'élastomère de polyuréthanne.

**40.** Utilisation selon la revendication 39, caractérisée en ce qu'on traite la fibre ou la feuille avec des faisceaux d'électrons ou avec des rayons UV.

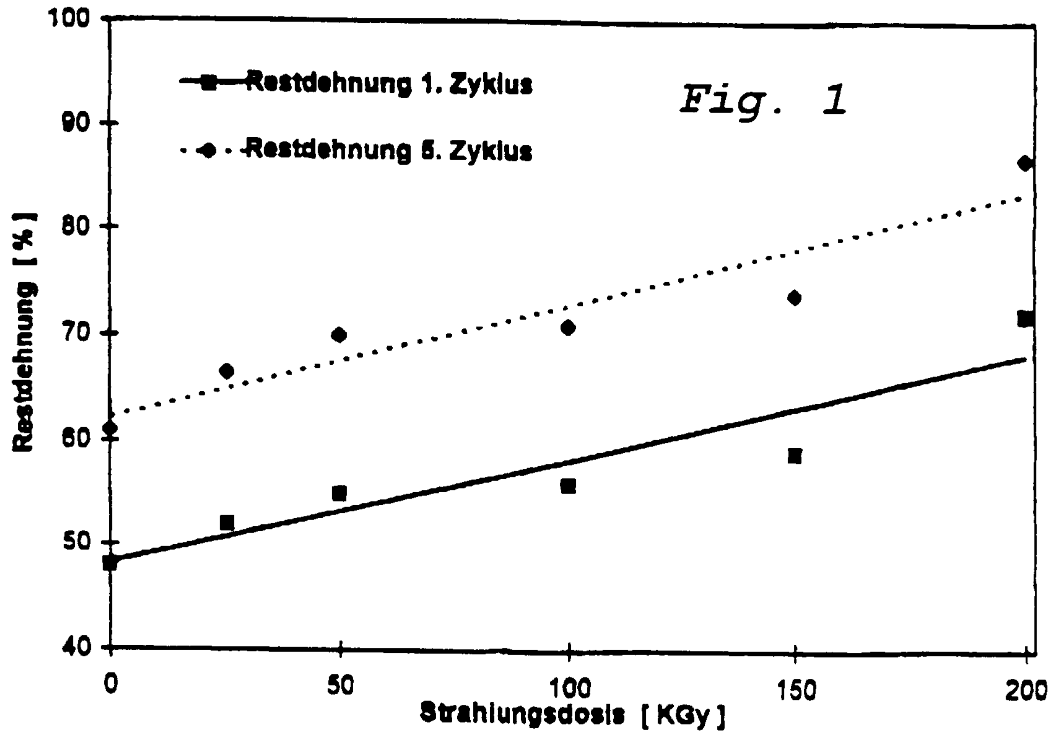
Restdehnung 1. Zyklus
Restdehnung 5. Zyklus
Fig. 1
Restdehnung [ % ]
Strahlungsdosis [ KGy ]
100
90
80
70
60
50
40
0
50
100
150
200

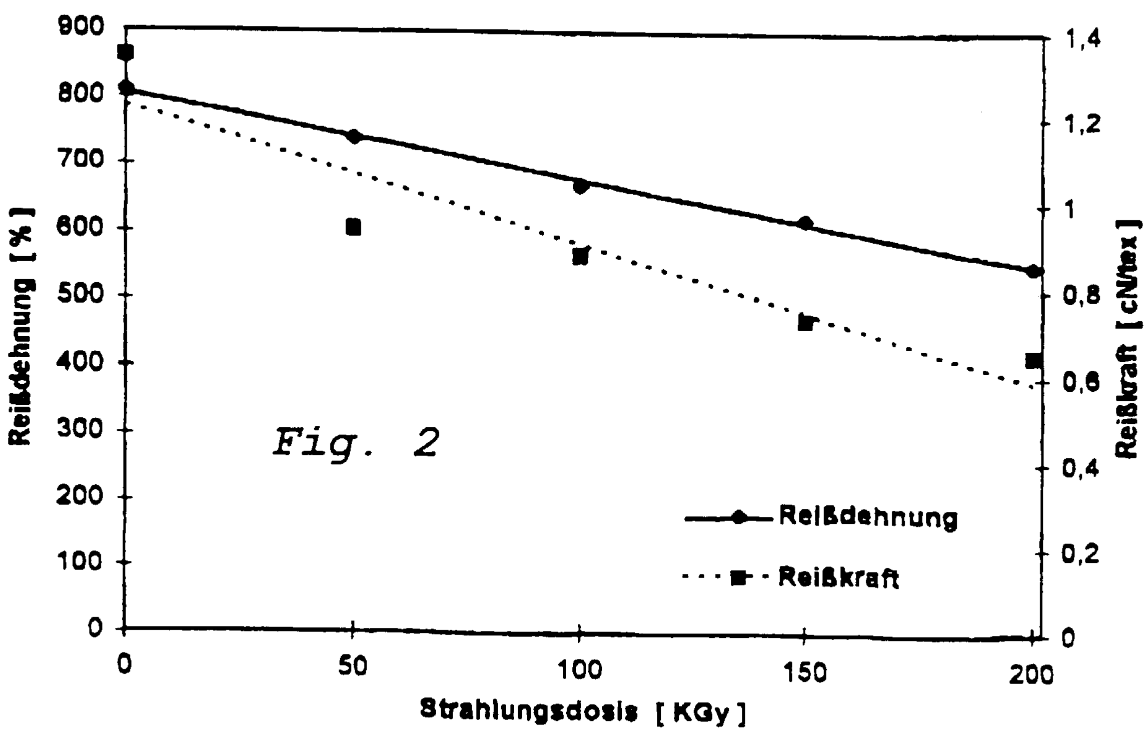
Fig. 2
Reißdehnung
Reißkraft
Reißdehnung [ % ]
Reißkraft [ cN/tex ]
Strahlungsdosis [ KGy ]
900
800
700
600
500
400
300
200
100
0
1,4
1,2
1
0,8
0,6
0,4
0,2
0
50
100
150
200

Fig. 3

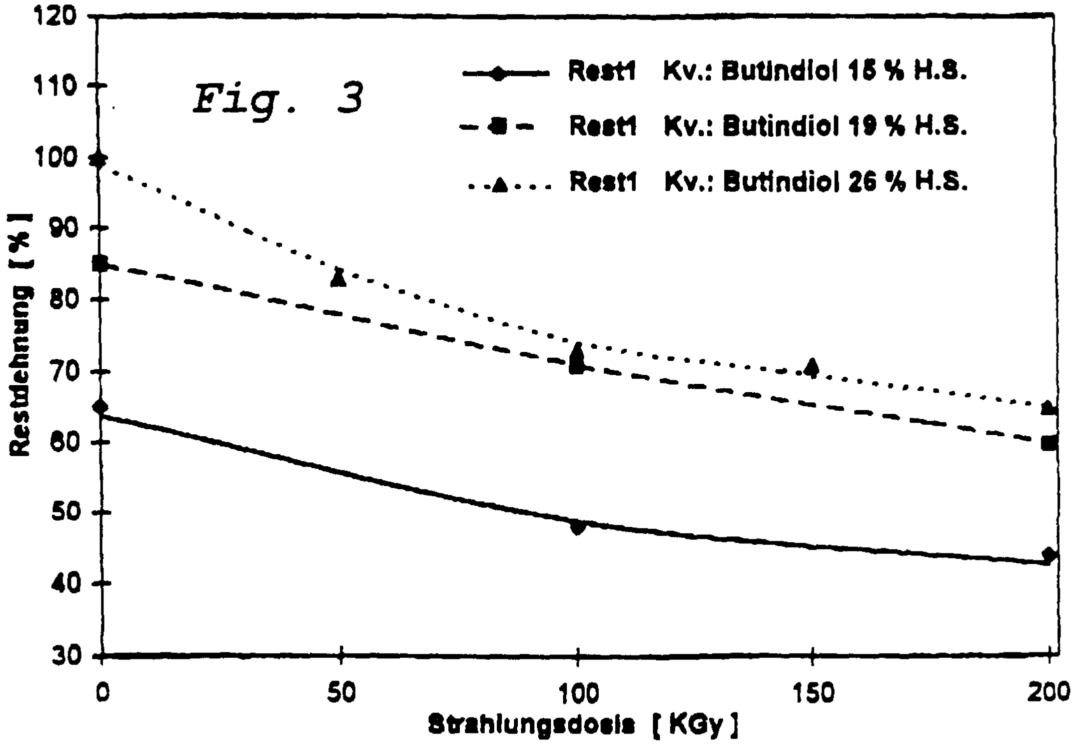
Rest1 Kv.: Butindiol 15 % H.S.
Rest1 Kv.: Butindiol 19 % H.S.
Rest1 Kv.: Butindiol 26 % H.S.
Restdehnung [%]
Strahlungsdosis [KGy]
120
110
100
90
80
70
60
50
40
30
0
50
100
150
200

Fig. 4

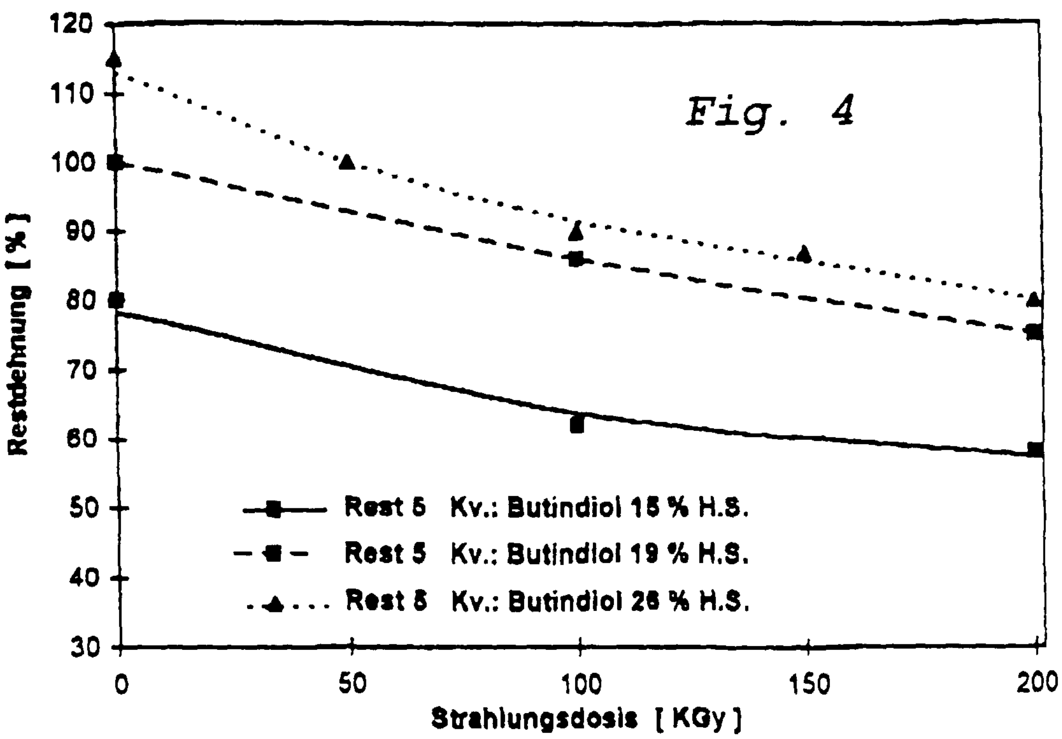
Rest 5 Kv.: Butindiol 15 % H.S.
Rest 5 Kv.: Butindiol 19 % H.S.
Rest 5 Kv.: Butindiol 26 % H.S.
Restdehnung [%]
Strahlungsdosis [KGy]
120
110
100
90
80
70
60
50
40
30
0
50
100
150
200

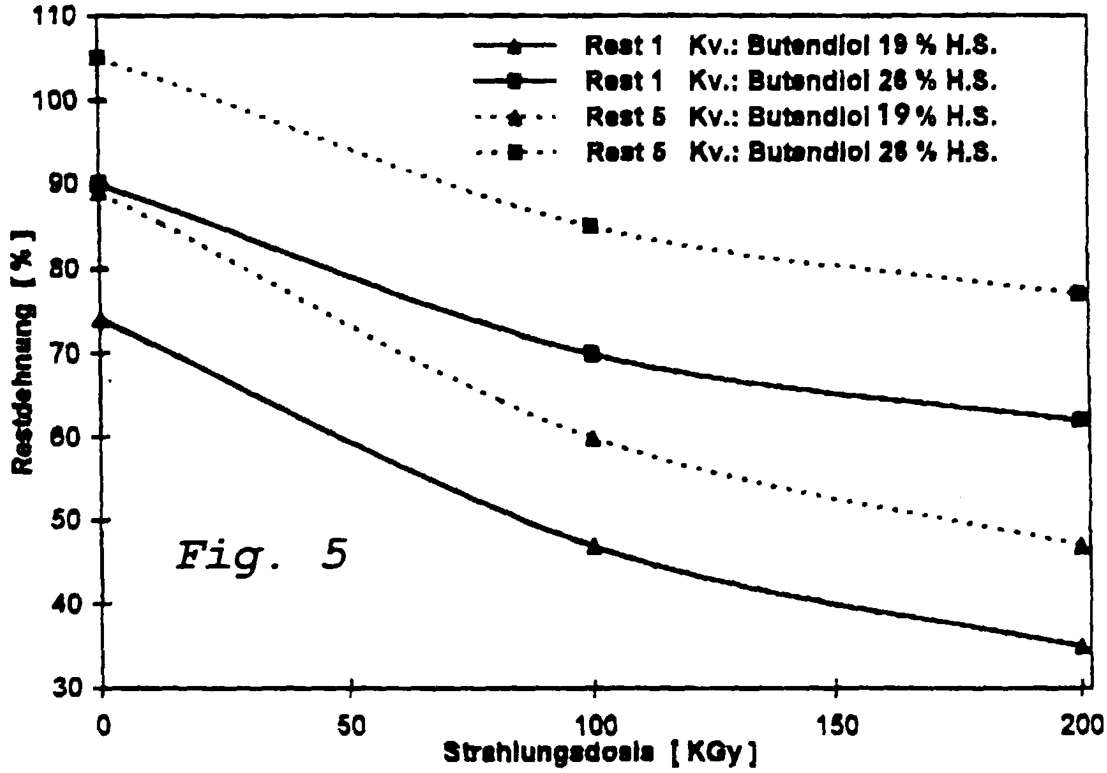
Rest 1 Kv.: Butendiol 19 % H.S.
Rest 1 Kv.: Butendiol 26 % H.S.
Rest 5 Kv.: Butendiol 19 % H.S.
Rest 5 Kv.: Butendiol 26 % H.S.
Restdehnung [ % ]
Strahlungsdosis [ KGy ]
Fig. 5

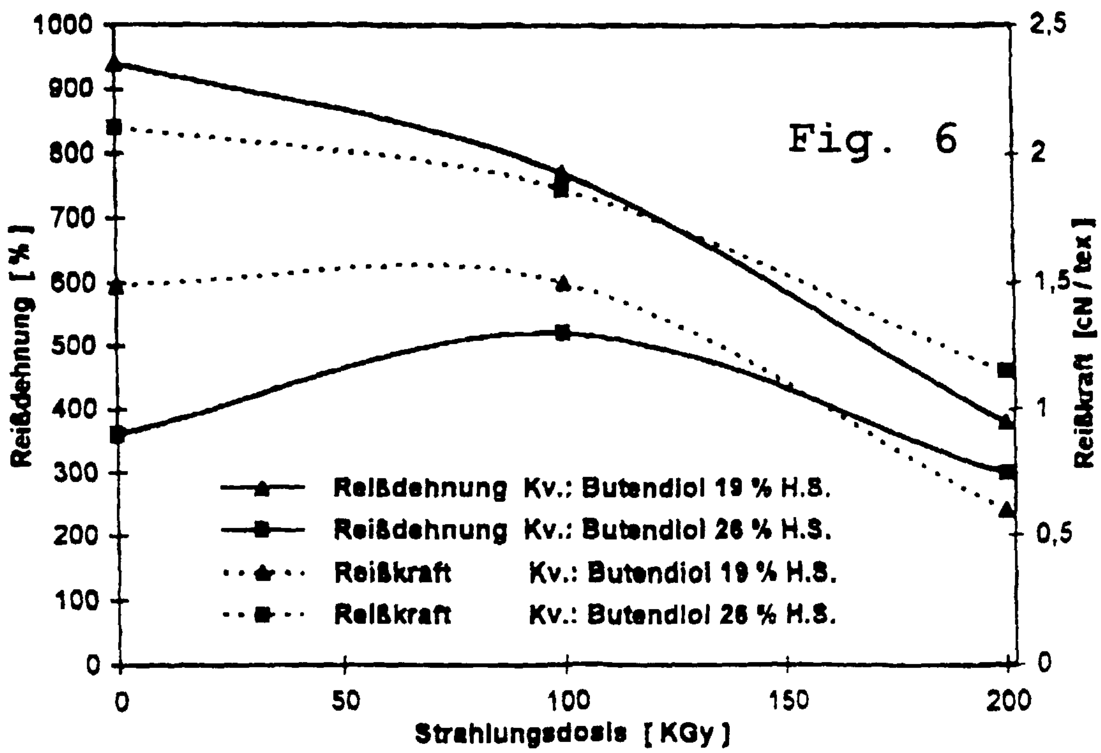
Fig. 6
Reißdehnung Kv.: Butendiol 19 % H.S.
Reißdehnung Kv.: Butendiol 26 % H.S.
Reißkraft Kv.: Butendiol 19 % H.S.
Reißkraft Kv.: Butendiol 26 % H.S.
Reißdehnung [ % ]
Reißkraft [cN / tex ]
Strahlungsdosis [ KGy ]